# EUROPÄISCHE PATENTANMELDUNG

(11) **EP 2 357 690 A1**
(43) Veröffentlichungstag der Anmeldung: **17.08.2011**
(21) Anmeldenummer: 11161483.0
(22) Anmeldetag: 28.07.2008
(51) Int. Cl.: H01M 2/10, B25F 5/02, H01M 2/34

(54) **Akkupack und Elektrogerät mit dreidimensionalen Kodiermitteln**

(30) Priorität: 18.09.2007 DE 102007044501
(62) Teilanmeldung aus: 08786508.5
(71) Anmelder: Robert Bosch GmbH, 70442 Stuttgart (DE)
(72) Erfinder: Matthias, Wolf, 70469, Stuttgart (DE); Glauning, Rainer, 70771, Leinfelden-Echterdingen (DE)

(57) **Zusammenfassung**

Die Erfindung beschreibt einen Akkupack für ein Elektrogerät, insbesondere für eine Handwerkzeugmaschine, mit Mitteln (21, 22, 23, 24, 25, 26, 27, 28, 29) zur mechanischen Kodierung für ein Zusammenwirken mit korrespondierenden Kodiermitteln an einem Elektrogerät, wobei die Kodiermittel (21, 22, 23, 24, 25, 26, 27, 28, 29) bezüglich einer ersten Achse (1) in Einschubrichtung, einer zweiten Achse (2) quer zur Einschubrichtung und einer dritten Achse (3) quer zur Einschubrichtung und quer zur zweiten Achse (2) derart zueinander angeordnet sind, dass sie ein dreidimensionales Kodiersystem (20) bilden.

## Beschreibung

### Stand der Technik

Die Erfindung betrifft einen Akkupack für ein Elektrogerät sowie ein Elektrogerät, insbesondere eine Handwerkzeugmaschine, nach dem Oberbegriff der unabhängigen Ansprüche 1 sowie 8.

Es gibt zahlreiche Elektrowerkzeuge, die zur Spannungsversorgung mit Wechselakkupacks ausgestattet sind. Die Akkupacks sind meist speziell für ein bestimmtes Elektrowerkzeug ausgelegt. Andere nicht für das Elektrowerkzeug vorgesehene Akkupacks, z.B. mit einer anderen Nennspannung, dürfen nicht für das Elektrowerkzeug eingesetzt werden, damit der Akkupack und/oder das Elektrowerkzeug keinen Schaden nehmen. Zur Sicherstellung der Zuordnung des passenden Akkupacks zu einem Elektrowerkzeug ist es bekannt, mechanische Kodiersysteme einzusetzen, die das Einstecken und elektrische Kontaktieren des Akkupacks nur dann zulassen, wenn der Akkupack eine Kodierung aufweist, die mit der Gegenkodierung des Elektrowerkzeugs korrespondiert. In DE 10 2005 008 036 A1 ist beispielsweise ein einsteckbarer Akkupack für ein Elektrowerkzeug mit einem mechanischen Kodiersystem beschrieben, wobei die Kodierung mindestens eine mit mindestens einem werkzeugseitigen, die Gegenkodierung bildenden Vorsprung an gegenüberliegenden Seiten zusammenwirkende Vertiefung aufweist.

Insbesondere dann, wenn mehrere verschiedene Akkupacks für verschiedene elektrische Geräte zur Verfügung stehen, muss bei einem Austausch eines Akkupacks zuverlässig verhindert werden, dass ein falscher Akkupack dem Elektrowerkzeug zugeordnet wird. Deshalb ist ein sicheres und im Wesentlichen nicht manipulierbares Kodiersystem erforderlich.

### Offenbarung der Erfindung

Die Erfindung geht aus von einem Akkupack für ein Elektrogerät, insbesondere für eine Handwerkzeugmaschine, welches Mittel zur mechanischen Kodierung für ein Zusammenwirken mit korrespondierenden Kodiermitteln an einem Elektrogerät aufweist.

Erfindungsgemäß sind die Kodiermittel bezüglich einer ersten Achse in Einschubrichtung, einer zweiten Achse quer zur Einschubrichtung und einer dritten Achse quer zur Einschubrichtung und quer zur zweiten Achse derart zueinander angeordnet, dass sie ein dreidimensionales Kodiersystem bilden. Unter einem dreidimensionalen Kodiersystem wird ein Kodiersystem verstanden, dessen Kodiermittel in allen drei Koordinatenachsen bezüglich der Einschubrichtung wirken. Die dreidimensionale Kodierung resultiert nicht nur aus der dreidimensionalen Form der Kodiermittel, sondern aus der räumlichen Anordnung der Kodiermittel zueinander. Dies erlaubt eine noch größere Vielzahl an möglichen Kombinationen von Kodiermitteln selbst bei gleicher dreidimensionaler Form der Kodiermittel. Das erfindungsgemäße dreidimensionale Kodiersystem ermöglicht es, Fehlmanipulationen, also die Zuordnung von nicht zulässigen Akkupacks zu einem Elektrogerät, zuverlässig zu verhindern. Kodiermittel und Gegenkodiermittel müssen nicht nur maßlich, sondern auch in ihrer räumlichen Anordnung zueinander passen. Korrespondiert ein Kodiermittel maßlich und/oder in seiner räumlichen Anordnung nicht genau mit einem Gegenkodiermittel, können der Akkupack und das Elektrogerät nicht miteinander verbunden werden. So ist sichergestellt, dass nur zugelassene Akkupacks einem Elektrogerät zugeordnet werden.

Als erste Achse wird im Rahmen der vorliegenden Erfindung die Achse definiert, die parallel zur Einschubrichtung verläuft. Die zweite Achse wird von der Achse gebildet, die sich in einer ersten Richtung quer zur Einschubrichtung erstreckt, während die dritte Achse diejenige Achse ist, die sich quer zur Einschubrichtung und quer zur zweiten Achse erstreckt. Dabei hängt die räumliche Ausrichtung der drei zueinander in einem rechten Winkel stehenden Achsen von der Einschubrichtung des Akkupacks ab. Der Akkupack kann beispielsweise dazu vorgesehen sein, an dem unteren freien Ende des Handgriffs einer Handwerkzeugmaschine angebracht zu werden, um einen Standfuß auszubilden. In diesem Fall liegt die Einschubrichtung in der Horizontalen, so dass die erste Achse in Einschubrichtung ebenso wie die zweite Achse quer zur Einschubrichtung horizontale Achsen sind, während die dritte Achse quer zur Einschubrichtung eine vertikale Achse ist. Es gibt jedoch beispielsweise auch Akkupacks, welche an dem unteren freien Ende des Handgriffs in vertikaler Richtung in den Handgriff eingeführt werden. In diesem Fall liegt die Einschubrichtung in der Vertikalen. Die zweite Achse quer zur Einschubrichtung sowie die dritte Achse quer zur Einschubrichtung sind dagegen horizontale Achsen. Grundsätzlich kann ein Akkupack auch in einem beliebigen Winkel relativ zu einer Handwerkzeugmaschine eingeschoben werden. In einer weiteren Alternative kann der Akkupack auch durch eine Schwenkbewegung an der Handwerkzeugmaschine angebracht werden. Auch bei einem derartigen Akkupack kann ein dreidimensionales Kodiersystem zum Einsatz kommen, wobei in entsprechender Weise eine Einschubrichtung definiert werden kann.

Die Kodiermittel sind vorzugsweise im Bereich der Schnittstelle zwischen Akkupack und Elektrogerät angeordnet. Im Bereich der Schnittstelle sind außerdem elektrische Kontaktelemente für die Spannungsversorgung sowie ggf. weitere Kontaktelemente, z.B. für den Datenaustausch, vorhanden. Ferner kann im Bereich der Schnittstelle eine Verriegelungsvorrichtung angeordnet sein, mit der der Akkupack mit dem Elektrogerät lösbar, aber sicher verbunden werden kann.

Eine Kodierung entlang der ersten Achse in Einschubrichtung erfolgt beispielsweise dadurch, dass zwei Kodiermittel in Einschubrichtung versetzt zueinander angeordnet sind. Die Kodiermittel an einem Akkupack können beispielsweise Kodierrippen sein. Die Gegenkodiermittel an einer Handwerkzeugmaschine werden dementsprechend von korrespondierenden Kodierrippen gebildet. Sind beispielsweise zwei Kodierrippen in der ersten Achse versetzt zueinander angeordnet, sind die korrespondierenden Kodierrippen entlang der ersten Achse unterschiedlich lang ausgebildet. Ein Versatz der Kodiermittel in der ersten Achse kann zum Beispiel kombiniert sein mit einem Versatz in der zweiten Achse, so dass die Kodiermittel in Einschubrichtung nicht fluchtend zueinander, sondern hintereinander und seitlich versetzt angeordnet sind.

Eine Kodierung entlang der zweiten Achse quer zur Einschubrichtung erfolgt beispielsweise dadurch, dass zwei Kodiermittel quer zur Einschubrichtung versetzt zueinander angeordnet sind. Zusätzlich können die quer zur Einschubrichtung in der zweiten Achse versetzt zueinander angeordneten Kodiermittel gleich oder verschieden sein. Sie können beispielsweise eine unterschiedliche Ausdehnung entlang der zweiten Achse aufweisen. So können die Kodiermittel z.B. Kodierrippen sein, die entlang der zweiten Achse gleich lang oder aber unterschiedlich lang ausgebildet sind. Die Gegenkodiermittel müssen dementsprechend korrespondierende Kodierrippen mit gleicher oder unterschiedlicher Länge entlang der dritten Achse aufweisen.

Eine Kodierung entlang der dritten Achse quer zur Einschubrichtung und quer zur zweiten Achse erfolgt beispielsweise dadurch, dass zwei Kodiermittel in der dritten Achse versetzt zueinander angeordnet sind. Dies kann beispielsweise dadurch erfolgen, dass die Kodiermittel in der dritten Achse eine unterschiedliche Ausdehnung aufweisen. Bei einem Akkupack mit einer horizontalen Einschubrichtung ist die dritte Achse vertikal ausgerichtet, so dass die Kodiermittel eine unterschiedliche vertikale Ausdehnung haben.

Alternativ können die Kodiermittel in der dritten Achse zueinander versetzt angeordnet sein, indem die Kodiermittel auf mindestens zwei unterschiedlichen Kodierebenen angeordnet sind. Eine Kodierebene wird durch zwei der drei Achsen aufgespannt. Beispielsweise können bei einem Akkupack mit einer horizontalen Einschubrichtung die erste und die zweite Achse eine horizontale Kodierebene aufspannen. In der Kodierebene sind die Kodiermittel so angeordnet, dass sie ein dreidimensionales Kodiersystem bilden. Um die Kodiermittel auch in der dritten Achse zueinander versetzt anordnen zu können, sind vorzugsweise zwei oder mehrere parallele Kodierebenen vorgesehen. Bei einem Akkupack mit horizontaler Einschubrichtung können zwei horizontale parallele Kodierebenen beispielsweise in Einschubrichtung hintereinander mit einem vertikalen Versatz angeordnet sein. Die beiden horizontalen parallelen Kodierebenen können auch quer zur Einschubrichtung seitlich und vertikal versetzt angeordnet sein. In analoger Weise können bei einem Akkupack mit vertikaler Einschubrichtung zwei vertikale parallele Kodierebenen in Einschubrichtung hintereinander oder seitlich und mit einem horizontalen Versatz vorgesehen sein. Außerdem ist es möglich, mehr als zwei Kodierebenen vorzusehen, die in Einschubrichtung hintereinander und/oder seitlich versetzt zueinander angeordnet sein können. Ein dreidimensionales Kodiersystem mit zwei oder mehreren Kodierebenen erhöht die Vielfalt an zusätzlichen Kombinationsmöglichkeiten der Kodiermittel erheblich. So kann umso sicherer verhindert werden, dass ein Akkupack mit einem Elektrogerät kombiniert wird, für welches der Akkupack nicht vorgesehen ist. Parallel, aber versetzt zueinander angeordnete Kodierebenen haben insbesondere den Vorteil, dass das dreidimensionale Kodiersystem mit einer hohen Vielfalt an Kodiermöglichkeiten auf möglichst geringem Raum untergebracht werden kann.

Anstelle zweier oder mehrerer paralleler Kodierebenen können auch zwei oder mehrere Kodierebenen in einem rechten Winkel zueinander stehen. Beispielsweise können bei einem Akkupack mit horizontaler Einschubrichtung eine horizontale und eine vertikale Kodierebene vorgesehen sein, wobei die horizontale Kodierebene von der ersten und der zweiten Achse und die vertikale Kodierebene von der ersten und der dritten Achse aufgespannt werden. Die senkrecht zueinander angeordneten Kodierebenen können so mit Kodiermitteln ausgestattet sein, dass ein dreidimensionales Kodiersystem gebildet wird. Senkrecht zueinander angeordnete Kodierebenen können beispielsweise bei Akkupacks mit vertikaler Einschubrichtung eingesetzt werden, da hierbei in der Regel trotz der Kompaktheit der Akkupacks und der Elektrogeräte mehr Raum im Bereich der Schnittstelle für die Kodiermittel zur Verfügung steht.

Das dreidimensionale Kodiersystem umfasst mindestens zwei Kodiermittel. Sind nur zwei Kodiermittel vorhanden, so sind diese bezüglich der ersten Achse, der zweiten Achse und der dritten Achse zueinander versetzt angeordnet, um ein dreidimensionales Kodiersystem zu bilden. Diese beiden Kodiermittel können beispielsweise Kodierrippen sein, welche in der ersten und zweiten Achse versetzt zueinander angeordnet sind und in der dritten Achse dadurch versetzt zueinander angeordnet sein, dass sie eine unterschiedliche Ausdehnung entlang der dritten Achse haben. Die beiden Kodiermittel können jedoch auch entlang der dritten Achse die gleiche Ausdehnung haben, jedoch auf unterschiedlichen Kodierebenen angeordnet sein.

Umfasst das dreidimensionale Kodiersystem mindestens drei Kodiermittel, so können jeweils zwei Kodiermittel auch nur bezüglich zwei der drei Achsen zueinander versetzt angeordnet sein, sofern die drei Kodiermittel insgesamt in allen drei Ebenen zueinander versetzt angeordnet sind, d.h. alle Kombinationen von jeweils zwei Kodiermitteln müssen einen Versatz der Kodiermittel in allen drei Achsen ergeben.

Je mehr Kodiermittel eingesetzt werden, umso größer ist die Vielfalt der möglichen Kombinationen der Kodiermittel. So kann wirkungsvoll verhindert werden, dass ein Akkupack mit einem Elektrogerät kombiniert wird, der für das Elektrogerät nicht geeignet ist. Je komplexer das dreidimensionale Kodiersystem ist, umso geringer ist außerdem die Gefahr, dass das Kodiersystem durch unzulässige Handhabung manipuliert werden kann, beispielsweise indem Kodierrippen entfernt oder überbrückt werden.

Die Kodiermittel und die Gegenkodiermittel selbst haben dreidimensionale Gestalt. Die Kodiermittel sind insbesondere Kodierrippen. Die Gegenkodiermittel werden dementsprechend von korrespondierenden Kodierrippen gebildet. Die Kodierrippen können auch abgerundete Kanten oder Ecken haben oder allgemein anstelle eines eckigen Querschnitts einen runden oder anders artig geformten Querschnitt haben. Die Kodierrippen können an dem Akkupack vorgesehen sein, während ein akkubetriebenes Elektrogerät als Gegenkodiermittel korrespondierende Kodierrippen aufweist. Andersherum kann natürlich auch das Elektrogerät, insbesondere die Handwerkzeugmaschine, mit Kodierrippen versehen sein, welche mit korrespondierenden Kodierrippen an einem Akkupack zusammenwirken.

Ein akkubetriebenes Elektrogerät, insbesondere eine Handwerkzeugmaschine, bildet einen weiteren Gegenstand der Erfindung. Das Elektrogerät ist dazu geeignet, mit dem erfindungsgemäßen Akkupack verbunden zu werden. Dazu weist das Elektrogerät Mittel zur mechanischen Kodierung auf, welche ein mit dem Kodiersystem des erfindungsgemäßen Akkupacks kompatibles Kodiersystem bilden. Die Kodiermittel des Elektrogeräts sind bezüglich einer ersten Achse in Einschubrichtung, einer zweiten Achse quer zur Einschubrichtung und einer dritten Achse quer zur Einschubrichtung derart zueinander angeordnet, dass sie ein dreidimensionales Kodiersystem bilden.

Nachfolgend wird die Erfindung anhand der beigefügten Zeichnungen näher erläutert. Es zeigen
- Figur 1: einen erfindungsgemäßen Akkupack mit einer ersten Ausführungsform eines dreidimensionalen Kodiersystems in perspektivischer Darstellung
- Figur 2: eine Schnittstelle einer Handwerkzeugmaschine mit einem zu dem Akkupack gemäß Fig. 1 korrespondierenden Kodiersystem
- Figur 3: eine zweite Ausführungsform eines dreidimensionalen Kodiersystems in schematischer Darstellung
- Figur 4: eine dritte Ausführungsform eines dreidimensionalen Kodiersystems in schematischer Darstellung
- Figur 5: eine vierte Ausführungsform eines dreidimensionalen Kodiersystems in schematischer Darstellung.

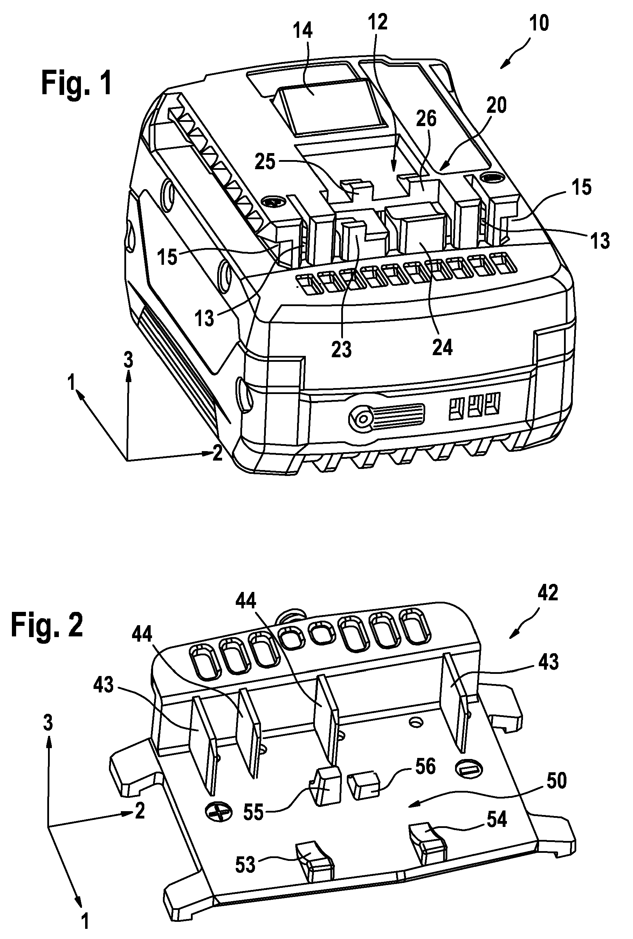

Figur 1 zeigt einen auswechselbaren Akkupack 10, der sich insbesondere für eine Handwerkzeugmaschine (nicht dargestellt), z.B. einen Bohrer oder Schrauber, eignet. Damit wirksam verhindert werden kann, dass der Akkupack 10 einer Handwerkzeugmaschine zugeordnet wird, für die der Akkupack 10 nicht zugelassen ist, sind Mittel 23, 24, 25, 26 zur mechanischen Kodierung an dem Akkupack 10 vorgesehen. Die mechanischen Kodiermittel 23, 24, 25, 26 wirken beim Anbringen des Akkupacks 10 an einer Handwerkzeugmaschine mit korrespondierenden Kodiermitteln (nicht dargestellt) zusammen, so dass nur bei einander korrespondierenden Kodiermitteln der Akkupack 10 an der Handwerkzeugmaschine anbringbar ist. Erfindungsgemäß bilden die Kodiermittel 23, 24, 25, 26 ein dreidimensionales Kodiersystem 20.

Das dreidimensionale Kodiersystem 20 ist im Bereich der Schnittstelle 12 zwischen Akkupack 10 und Handwerkzeugmaschine angeordnet. Im Bereich der Schnittstelle 12 sind außerdem elektrische Kontaktelemente 13 für die Spannungsversorgung vorhanden. Ferner ist im Bereich der Schnittstelle 12 eine Verriegelungsvorrichtung 14 mit einem Riegel angeordnet, mit dem der Akkupack 10 an einer Handwerkzeugmaschine lösbar, aber sicher verbunden werden kann. Weiterhin ist der Akkupack 10 mit Führungsmitteln 15 in Form von Führungsnuten ausgestattet. Die Führungsmittel 15 erleichtern das korrekte Einführen des Akkupacks 10 in die Akkupackaufnahme an einer Handwerkzeugmaschine. Wie Fig. 1 zu entnehmen ist, sind die Führungsmittel 15 in horizontaler Richtung angeordnet. Die Einschubrichtung ist demnach horizontal. Sie ist in Fig. 1 mit dem Pfeil 1 angedeutet und bildet zugleich die erste Achse 1. Der Akkupack 10 wird an einem freien unteren Ende eines Handgriffs einer Handwerkzeugmaschine befestigt und bildet einen Standfuß.

Die Kodiermittel 23, 24, 25, 26 haben in der dargestellten Ausführungsform nach Fig. 1 die Form von Kodierrippen. Die Gegenkodiermittel 53, 54, 55, 56 (Fig. 2) werden dementsprechend von korrespondierenden Kodierrippen gebildet. Wie Fig. 1 zu entnehmen ist, können die Kodierrippen auch abgerundete Kanten bzw. Ecken haben.

Die Kodiermittel 23, 24, 25, 26 sind bezüglich einer ersten Achse 1, welche parallel zur Einschubrichtung verläuft, einer zweiten Achse 2, welche in einer ersten Richtung quer zur Einschubrichtung verläuft, sowie einer dritten Achse 3, welche in einer zweiten Richtung quer zur Einschubrichtung und quer zur zweiten Achse 2 verläuft, derart zueinander angeordnet, dass sie ein dreidimensionales Kodiersystem 20 bilden. Die Achsen 1, 2, 3 sind in den Figuren 1-5 anhand von Pfeilen angedeutet. In den dargestellten Ausführungsformen nach Fig. 1 bis 5 liegen die erste und die zweite Achse 1, 2 in der Horizontalen, während die dritte Achse 3 vertikal ausgerichtet ist. Die Kodiermittel 23, 24, 25, 26 bilden ein dreidimensionales Kodiersystem 20, indem die Kodiermittel 21 in allen drei Koordinatenachsen 1, 2, 3 wirken. Die dreidimensionale Kodierung 20 resultiert damit vor allem aus der räumlichen Anordnung der Kodiermittel 23, 24, 25, 26 zueinander. Zusätzlich können die Kodiermittel 23, 24, 25, 26 anhand ihrer dreidimensionalen Form die Vielfalt der Kodiermöglichkeiten erhöhen.

Das dreidimensionale Kodiersystem 20 nach Fig. 1 umfasst vier Kodiermittel 23, 24, 25, 26, welche auf zwei parallelen, aber vertikal zueinander versetzten Kodierebenen 31, 32 angeordnet sind. Die Kodierebenen 31, 32 werden jeweils durch die erste und zweite Achse 1, 2 aufgespannt. Sie erlauben es, ein dreidimensionales Kodiersystem 20 mit einer hohen Vielzahl an Kodiermöglichkeiten bei vergleichsweise geringem Raumbedarf vorzusehen. Die Kodiermittel 23, 25 bzw. 23, 26 sind in allen drei Achsen 1, 2, 3 versetzt zueinander angeordnet. Ebenso sind die Kodiermittel 24, 25 bzw. 24, 26 in allen drei Achsen 1, 2, 3 versetzt zueinander angeordnet, wobei hinzukommt, dass das Kodiermittel 24 breiter ist als die Kodiermittel 25, 26, d.h. seine Ausdehnung entlang der zweiten Achse 2 ist größer. Die Kodiermittelpaare 23, 24 bzw. 25, 26 sind jeweils nur in einer der drei Achsen, nämlich der zweiten Achse 2, versetzt zueinander angeordnet. Der Akkupack nach Fig. 1 lässt sich nur mit einer Handwerkzeugmaschine kombinieren, wenn dieses ein zu dem dreidimensionalen Kodiersystem 20 korrespondierendes Kodiersystem 50 aufweist.

Eine zu der Schnittstelle 12 des Akkupacks 10 korrespondierende Schnittstelle 42 einer Handwerkzeugmaschine ist in Fig. 2 perspektivisch abgebildet. Die Schnittstelle 42 ist mit zwei elektrischen Kontaktelementen 43 versehen, welche mit den Kontaktelementen 13 kontaktieren, wenn der Akkupack 10 an der Handwerkzeugmaschine angebracht ist. Des Weiteren sind zwei Datenkontaktelemente 44 vorgesehen. Die Schnittstelle 42 ist mit vier Kodiermitteln 53, 54, 55, 56 in Form von Kodierrippen versehen, welche ein dreidimensionales Kodiersystem 50 bilden, das zu dem Kodiersystem 20 korrespondierend ausgebildet ist, so dass der Akkupack 10 mit der Schnittstelle 42 der Handwerkzeugmaschine verbunden werden kann. Die Kodiermittel 53, 54, 55, 56 sind so angeordnet, dass sie an den Kodiermitteln 23, 24, 25, 26 vorbei gleiten, wenn der Akkupack mit Hilfe der Führungsmittel 15 in Einschubrichtung an der Handwerkzeugmaschine angebracht wird. Beispielsweise gleitet dabei das Kodiermittel 53 über das Kodiermittel 23 hinweg und an dem Kodiermittel 25 vorbei, während das Kodiermittel 54 über das Kodiermittel 24 hinweg und an dem Kodiermittel 26 vorbei gleitet. Das Kodiermittel 55 gleitet an dem Kodiermittel 23 vorbei und das Kodiermittel 56 über das Kodiermittel 24 hinweg.

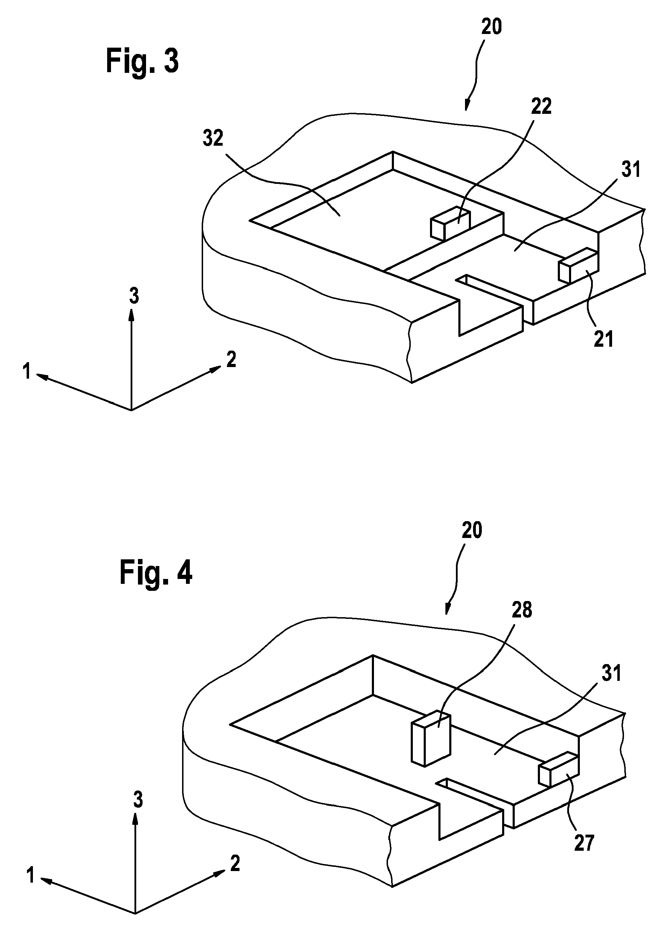

Fig. 3 zeigt ein einfaches Ausführungsbeispiel eines alternativen dreidimensionalen Kodiersystems 20 mit zwei Kodiermitteln 21, 22. Um ein dreidimensionales Kodiersystem 20 zu bilden, sind die beiden Kodiermittel 21, 22 sowohl bezüglich der ersten Achse 1 als auch bezüglich der zweiten Achse 2 sowie der dritten Achse 3 zueinander versetzt angeordnet. Fig. 2 ist klar zu entnehmen, dass die Kodiermittel 21, 22 in Einschubrichtung, d.h. entlang der ersten Achse 1, hintereinander angeordnet sind. Außerdem sind sie seitlich, d.h. entlang der zweiten Achse 2, versetzt zueinander angeordnet. Schließlich sind die Kodiermittel vertikal, d.h. entlang der dritten Achse 3, versetzt zueinander angeordnet, indem sie jeweils auf einer von zwei parallelen Kodierebenen 31, 32 angeordnet sind, welche mit einem vertikalen Versatz versehen sind. Die Kodierebenen 31, 32 werden gemäß Fig. 2 durch die erste und zweite Achse 1, 2 aufgespannt. Die beiden Kodierebenen 31, 32 erlauben es, ein dreidimensionales Kodiersystem 20 vorzusehen, welches eine hohe Vielzahl an Kodiermöglichkeiten bei vergleichsweise geringem Raumbedarf bietet.

Fig. 4 zeigt eine dritte Ausführungsform eines dreidimensionalen Kodiersystems 20. Es umfasst ähnlich wie das Kodiersystem nach Fig. 2 zwei Kodiermittel 27, 28. Um ein dreidimensionales Kodiersystem 20 zu bilden, sind die beiden Kodiermittel 27, 28 sowohl bezüglich der ersten Achse 1 als auch bezüglich der zweiten Achse 2 sowie der dritten Achse 3 zueinander versetzt angeordnet. Im Unterschied zu Fig. 2 sind jedoch die beiden Kodiermittel 27, 28 zwar nur in einer Kodierebene 31 angeordnet, jedoch in der dritten Achse 3 dadurch zueinander versetzt angeordnet, dass sie eine unterschiedliche Ausdehnung entlang der dritten Achse 3 aufweisen. Das Kodiermittel 28 ist höher als das Kodiermittel 21.

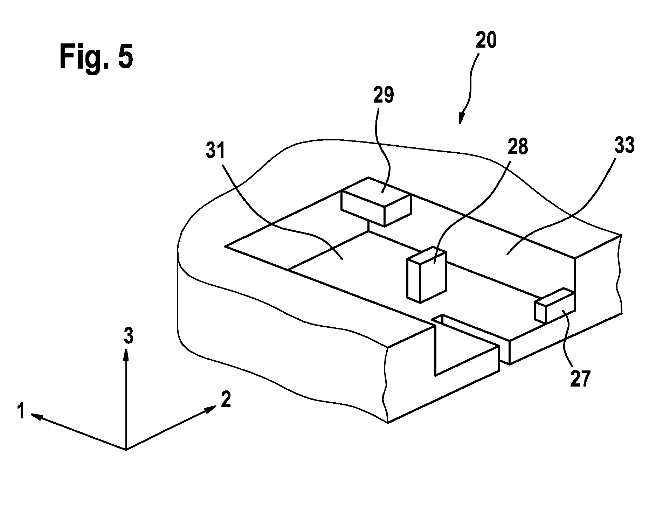

In Fig. 5 ist eine weitere Ausführungsform eines dreidimensionalen Kodiersystems 20 schematisch abgebildet, welches wiederum zwei Kodierebenen 31, 33 aufweist. Die Kodierebenen 31, 33 stehen im Unterschied zu den in Fig. 1 und 2 dargestellten Ausführungsformen senkrecht zueinander. Die Kodierebene 31 ist durch die Achsen 1,2, die Kodierebene 33 durch die Achsen 1, 3 aufgespannt. Das Kodiersystem umfasst analog zu der in Fig. 3 dargestellten Ausführungsform die Kodiermittel 27, 28 und zusätzlich ein Kodiermittel 29, welches zu dem Kodiermittel 27 in der ersten und der dritten Achse 1, 3 und zu dem Kodiermittel 28 in allen drei Achsen 1, 2, 3 versetzt angeordnet ist. Zwei senkrecht zueinander stehende Kodierebenen 31, 33 erlauben ebenfalls ein dreidimensionales Kodiersystem 20 zu etablieren, indem die Kodiermittel 27, 28, 29 in allen drei Achsen 1, 2, 3 zueinander versetzt angeordnet sind.

## Patentansprüche

1. Akkupack für ein Elektrogerät, insbesondere für eine Handwerkzeugmaschine, mit Führungsmitteln (15), elektrischen Kontaktelementen (13) und Mitteln (21, 22, 23, 24, 25, 26) zur mechanischen Kodierung für ein Zusammenwirken mit korrespondierenden Kodiermitteln an einem Elektrogerät, wobei die Kodiermittel (21, 22, 23, 24, 25, 26) Kodierrippen sind und bezüglich einer ersten Achse (1) in Einschubrichtung, einer zweiten Achse (2) quer zur Einschubrichtung und einer dritten Achse (3) quer zur Einschubrichtung und quer zur zweiten Achse (2) derart zueinander angeordnet sind, dass sie ein dreidimensionales Kodiersystem (20) bilden, **dadurch gekennzeichnet, dass** mindestens zwei Kodiermittel (21, 22, 23, 24, 25, 26) vorhanden sind, welche bezüglich der ersten Achse (1), der zweiten Achse (2) und der dritten Achse (3) zueinander versetzt angeordnet sind, wobei die Kodiermittel (21, 22, 23, 24, 25, 26) in der dritten Achse (3) zueinander versetzt angeordnet sind, indem die Kodiermittel (21, 22, 23, 24, 25, 26) in der dritten Achse (3) eine unterschiedliche Ausdehnung aufweisen.

2. Akkupack nach Anspruch 1, **dadurch gekennzeichnet, dass** die Kodiermittel in der ersten Achse (1) zueinander versetzt angeordnet sind, indem die Kodiermittel unterschiedliche Ausdehnung entlang der ersten Achse (1) aufweisen.

3. Akkupack nach Anspruch 1, **dadurch gekennzeichnet, dass** die Kodiermittel (21, 22) in der ersten Achse (1) zueinander versetzt angeordnet sind, indem die Kodiermittel (21, 22) in Einschubrichtung entlang der ersten Achse (1) hintereinander angeordnet sind.

4. Akkupack nach einem der vorhergehenden Ansprüche, **dadurch gekennzeichnet, dass** die Kodiermittel (23, 24) in der zweiten Achse (2) zueinander versetzt angeordnet sind, indem die Kodiermittel (23, 24) unterschiedliche Ausdehnung entlang der zweiten Achse (2) aufweisen.

5. Akkupack nach einem der Ansprüche 1 bis 3, **dadurch gekennzeichnet, dass** die Kodiermittel (21, 22) in der zweiten Achse (2) zueinander versetzt angeordnet sind, indem die Kodiermittel (21, 22) seitlich entlang der zweiten Achse (2) versetzt zueinander angeordnet sind.

6. Akkubetriebenes Elektrogerät, insbesondere Handwerkzeugmaschine, mit einem Akkupack nach einem der vorhergehenden Ansprüchen und mit zu den Kodiermitteln (21, 22, 23, 24, 25, 26) des Akkupacks korrespondierenden Mitteln (53, 54, 55, 56) zur mechanischen Kodierung.
